Europäisches Patentamt

European Patent Office

Office européen des brevets

(11) Veröffentlichungsnummer: **0 219 020**
**A2**

(12) # EUROPÄISCHE PATENTANMELDUNG

(21) Anmeldenummer: 86113746.1

(22) Anmeldetag: 03.10.86

(51) Int. Cl.⁴: **B 60 S 1/36**

(30) Priorität: 17.10.85 DE 3536995

(43) Veröffentlichungstag der Anmeldung:
22.04.87 Patentblatt 87/17

(84) Benannte Vertragsstaaten:
FR GB IT

(71) Anmelder: SWF Auto-Electric GmbH
Stuttgarter Str. 119
D-7120 Bietigheim-Bissingen(DE)

(72) Erfinder: Egner-Walter, Bruno
Käferflugstrasse 43
D-7100 Heilbronn(DE)

(72) Erfinder: Prohaska, Hans
Nelkenweg 44
D-7120 Bietigheim-Bissingen(DE)

(72) Erfinder: Schmid, Eckhardt
Heilnrunner Strasse 62
D-7129 Brackenheim(DE)

(72) Erfinder: Tietz, Volker
Gutenbergstrasse 26
D-7100 Heilbronn(DE)

(54) Scheibenwischeranlage, insbesondere für Kraftfahrzeuge.

(57) Es wird eine Scheibenwischeranlage für Kraftfahrzeuge beschrieben, bei der in einem pendelnd angetriebenen Gehäuse ein mit einem Wischhebel verbundener Schieber radial verschiebbar gelagert ist. Als Mittel zum radialen Verschieben des Schiebers dient dabei ein Schraubengetriebe, was gegenüber bekannten Ausführungen den Vorteil hat, daß ein großer Verstellhub bei kleiner Baugröße realisierbar ist.

Fig. 1

EP 0 219 020 A2

Scheibenwischeranlage, insbesondere für Kraftfahrzeuge

Die Erfindung bezieht sich auf Scheibenwischeranlage gemäß den Merkmalen des Oberbegriffs des Anspruchs 1.

Eine Scheibenwischeranlage dieser Art ist aus der DE-PS 22 15 307 bekannt. Bei dieser bekannten Ausführung ist als Mittel zum radialen Hin- und Herverschieben des Schiebers in dem Führungsgehäuse ein Kurbeltrieb vorgesehen. Wenn man bei einer solchen Anlage einen großen Verstellhub des Schiebers realisieren will, benötigt man ein verhältnismäßig großes Führungsgehäuse, denn der Verstellhub ist im wesentlichen abhängig von der Länge der Kurbel dieses Kurbeltriebs.

Aus der DE-PS 24 17 128 ist bereits eine Wischeranlage bekannt, bei der zur Vergrößerung des Verstellhubes bei kleiner Baugröße des Führungsgehäuses ein Zahnstangenantrieb zum radialen Hin- und Herverschieben des Schiebers vorgesehen ist. Gegenüber der erstgenannten Ausführung erreicht man mit solch einem Getriebe bereits eine wesentliche Verkleinerung des Führungsgehäuses.

Allerdings entspricht auch diese Lösung nicht allen Anforderungen, insbesodere wenn ein sehr großer Verstellhub benötigt wird. Der vorliegenden Erfindung liegt daher die Aufgabe zugrunde, eine Scheibenwischeranlage der eingangs erwähnten Art so weiterzubilden, daß die Baugröße des Führungsgehäuses und damit auch dessen Gewicht auf ein Mindestmaß reduziert wird und dennoch ein großer Verstellhub realisiert werden kann.

Diese Aufgabe wird erfindungsgemäß mit den kennzeichnenden Merkmalen des Anspruchs 1 gelöst.

Der vorliegenden Erfindung liegt dabei die Überlegung zugrunde, daß die Baugröße des Führungsgehäuses in einer Ebene quer zur Verstellrichtung des Schiebers allein durch die Abmessungen des Schraubengetriebes bestimmt wird und wegen des Wegfalls einer Kurbel dann keine seitlich abstehenden Gehäuseausbuchtungen notwendig sind. Insbesondere beruht die Erfindung auch auf der Überlegung, daß bei einer solchen Ausführung die Baugröße quer zur

Verschieberichtung des Schiebers unabhängig ist von dem erwünschten Verstellhub.

Um unnötige Reibungsverluste zu vermeiden und einen guten Wirkungsgrad zu erreichen, wird dieses Schraubengetriebe vorzugsweise als Wälzschraubengetriebe ausgebildet. Dabei sind also zwischen der Gewindespindel und der Gewindehülse Wälzkörper in Form von Rollen oder Kugeln vorgesehen.

Prinzipiell könnte man den Aufbau dieses Schraubengetriebes so wählen, daß die Gewindehülse oder Gewindemutter die Drehbewegung ausführt und die in dieser Gewindehülse geführte Gewindespindel als Schieber wirkt und in Achsialrichtung hin- und herverschoben wird. Allerdings ergeben sich dann Probleme hinsichtlich der Abdichtung an der Austrittsstelle dieser Gewindespindel aus dem Gehäuse, wenn diese Gewindespindel auch in diesem Bereich noch Gewindegänge aufweist.

Deswegen wird einer Lösung der Vorzug gegeben, bei der in dem Führungsgehäuse drehbar eine Gewindespindel gelagert ist, wobei dann der Schieber als drehfest in dem Führungsgehäuse geführte Gewindehülse ausgebildet ist. Diese Gewindehülse kann dann eine im wesentlichen glatte Außenfläche aufweisen, so daß die Austrittsstelle dieser Gewindehülse aus dem Führungsgehäuse ohne größeren Aufwand einwandfrei abgedichtet werden kann.

Die Erfindung und weitere vorteilhafte Ausgestaltungen werden nachfolgend anhand des in der Zeichnung dargestellten Ausführungsbeispieles näher erläutert. Es zeigen:

    Fig. 1  einen Längsschnitt durch das Führungsgehäuse einer Wischeranlage,

    Fig. 2  einen Schnitt entlang der Schnittlinie II in Fig. 1 und

    Fig. 3  einen Schnitt entlang der Schnittlinie III in Fig. 1.

In der Zeichnung ist mit 10 das Führungsgehäuse bezeichnet, das im wesentlichen aus einem gegossenen Basisteil 11 mit einem Stutzen 12 und einer Grundplatte 13 sowie einem in dem Stutzen 12 festgelegten Metallrohr 14 besteht. In der Grundplatte 13 ist mittels mehrerer Schrauben 15 der Flansch einer hohlen Antriebswelle 16 festgeschraubt. Diese Antriebswelle 16 wird von einem nicht näher dargestellten Motor über geeignete Getriebemittel pendelnd angetrieben. Das gesamte Führungsgehäuse 10 pendelt damit um die Achse A.

Am antriebsseitigen Ende des Stutzens 12 ist ein Sprengring 20 festgelegt, der als axiale Anschlagfläche für ein Kugellager 21 dient, das in den Stutzen 12 eingepreßt ist. In der anderen Richtung ist dieses Kugellager 21 durch die Stirnfläche des ebenfalls in den Stutzen 12 eingepreßten Metallrohres 14 gesichert. Das Kugellager 21 ist also in dem Basisteil 11 fixiert.

In diesem Kugellager 21 ist einseitig eine Gewindespindel 30 drehbeweglich geführt, die einen bis in die andere Stirnfläche 31 auslaufenden Gewindegang 32 aufweist. Auf dem antriebsseitigen Ende dieser Gewindespindel 30 ist ein Kegelrad 33 über einen Splint drehfest festgelegt. Durch dieses Kegelrad 33 und einen Ansatz an der Gewindespindel 30 ist diese Gewindespindel in Achsrichtung unverschiebbar am Führungsgehäuse 10 drehbeweglich gelagert. Über die Gewindespindel 30 ist eine Gewindehülse 40 mit einer durchgehenden Bohrung 41 gestülpt. Diese Gewindehülse 40 hat ebenfalls einen Gewindegang 42. In den Gewindegang 32 der Gewindespindel 30 und in den Gewindegang 42 der Gewindehülse 40 sind Wälzkörper, im vorliegenden Fall Kugeln 43 eingelegt. Die Gewindehülse 40 hat auf ihrer äußeren Mantelfläche abschnittsweise und gleichmäßig über den Umfang verteilt vier Längsnuten 45, die mit entsprechenden Längsnuten 46 in der Gehäusewand, also bei der vorliegenden Ausbildung in dem Metallrohr 14 korrespondieren, wobei in diese beiden Längsnuten 45, 46 Kugeln 47 eingreifen, so daß eine Verdrehsicherung zwischen der Gewindehülse 40 und dem Metallrohr 14 bzw. Führungsgehäuse 10 geschaffen ist.

Bei diesem Ausführungsbeispiel erfüllt also die Gewindehülse 40 die Funktion des Schiebers, der während der Pendelbewegung des Führungsgehäuses 10 radial in Pfeilrichtung P hin- und herverschoben wird. Diese Gewindehülse

40 hat also an ihrem freien Stirnende Mittel 47 zur Fixierung eines nicht näher dargestellten Wischarmes eines Wischhebels.

In der hohlen Antriebswelle 16 ist eine Welle 50 drehbeweglich gelagert, die ein Kegelrad 51 trägt, welches mit dem Kegelrad 33 an der Gewindespindel 30 kämmt. Folglich wird also die Gewindespindel 30 gedreht, sobald die Welle 50 in Drehung versetzt wird. Dann verschiebt sich die Gewindehülse, die ja drehfest in dem Führungsgehäuse 10 geführt ist, in Pfeilrichtung P. Auf diese Weise wird die wirksame Länge des Scheibenwischers vergrößert, so daß bestimmte Bereiche, insbesondere Eckbereiche einer Windschutzscheibe besser gereinigt werden.

Insgesamt läßt sich also zu der in der Zeichnung dargestellten Scheibenwischeranlage folgendes feststellen:

Als Mittel zum radialen Verschieben des Schiebers (Gewindehülse 40) wird erfindungsgemäß ein Schraubengetriebes (Gewindespindel 30 und Gewindehülse 40) eingesetzt. Dabei ist die Gewindespindel 30 in dem Führungsgehäuse 10 drehbeweglich gelagert, während als Schieber die drehfest im Führungsgehäuse 10 geführte Gewindehülse 40 dient. Im Interesse einer geringen Reibung sind sowohl Wälzkörper zwischen der Gewindespindel und der Gewindehülse als auch zwischen der Gewindehülse und dem Führungsgehäuse vorgesehen.

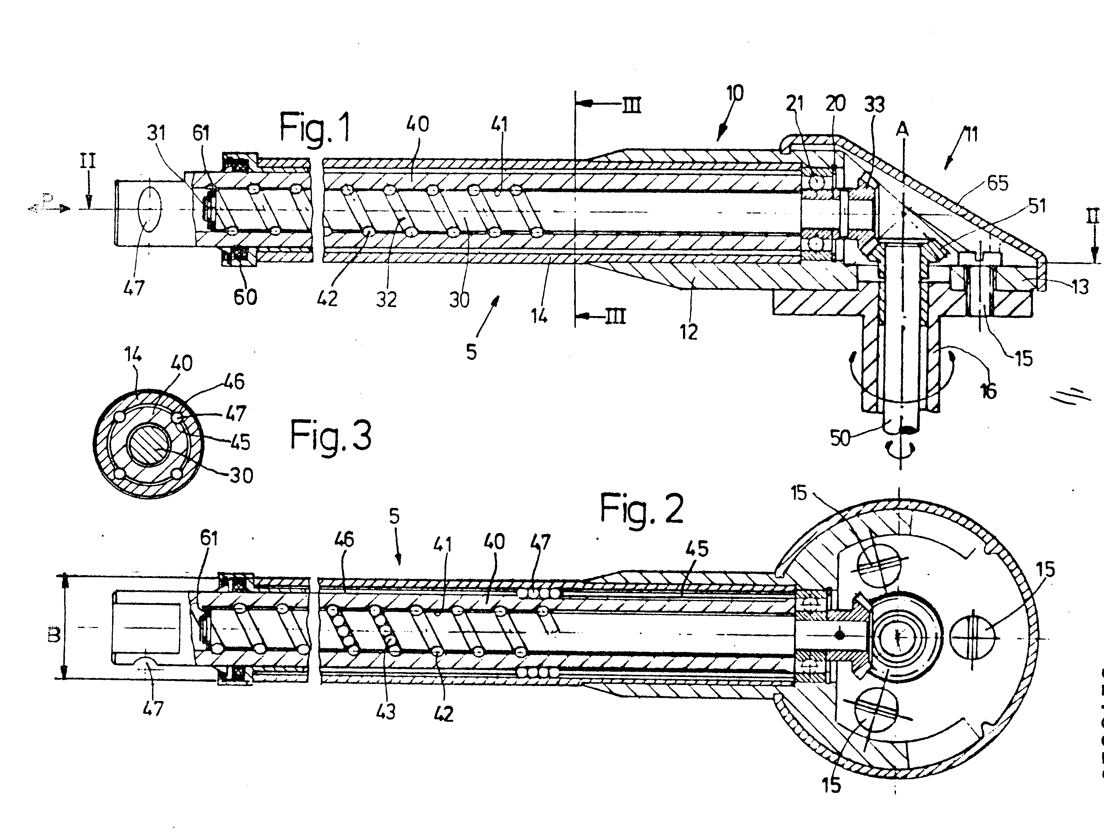

Insbesondere aus Fig. 2 erkennt man, daß die Breite B dieses Führungsgehäuses 10 über den gesamten Führungsbereich im wesentlichen von dem Durchmesser der Gewindehülse 40 bzw. dem Metallrohr 14 bestimmt wird. Lediglich im Antriebsbereich hat dieses Führungsgehäuse 10 eine größere Breite. Dies stört aber nicht, da dieser Bereich des Basisteils 11 nicht in den Bereich der zu reinigenden Scheibe einschwenkt. Im Übrigen ist diese Vergrößerung auch nicht funktionsbedingt, denn die Zeichnungen zeigen deutlich, daß die Breite des Kegelradgetriebes mit den beiden Kegelrädern 33 und 51 nicht größer ist als die Breite bzw. der Durchmesser des Metallrohres 14. Das Basisteil 11 könnte also durchaus kleiner gebaut werden.

Abschließend wird noch auf einige vorteilhafte Ausgestaltungen dieser Scheibenwischeranlage hingewiesen. Mit 60 ist ein Dichtelement bezeichnet, das in an sich bekannter Weise die stirnseitige Öffnung des Führungsgehäuses

10 abdichtet. Der Gewindegang 32 läuft in die vordere Stirnfläche 31 der Gewindespindel 30 aus, was aus fertigungstechnischen Gründen vorteilhaft ist. Außerdem können dann dort die Kugeln 43 eingelegt werden. Allerdings muß man bei einer solchen Ausführung an der Stirnfläche eine Abdeckscheibe 61 fixieren, die dann diesen Gewindegang abschließt. Die Gewindehülse hat eine durchgehende Bohrung 41, damit ebenfalls in fertigungstechnisch einfacher Weise der Gewindegang eingearbeitet werden kann. Dann muß man natürlich diese Bohrung durch ein in der Zeichnung nicht näher dargestelltes Verschlußstück abschließen, damit durch Umwelteinflüsse nicht der Wirkungsgrad der Scheibenwischeranlage herabgesetzt wird. Dieses Verschlußstück könnte Teil des Befestigungselementes des nicht näher dargestellten Wischarmes sein.

Prinzipiell könnte man natürlich das Basisteil 11 und das Rohr 14 auch einstückig ausbilden, doch wird die zweiteilige Ausführung bevorzugt, weil man einen verhältnismäßig harten Werkstoff benötigt, damit ein ruhiger Lauf der Kugeln 47 auch nach längerer Betriebszeit gesichert ist. Eine Abdeckkappe 65 ist über den antriebsseitigen Teil des Basisteils 11 bzw. die Grundplatte 13 gestülpt, so daß auch von dieser Seite her keine Flüssigkeit in den Getriebeteil eindringen kann.

Insgesamt ist damit eine Scheibenwischeranlage geschaffen, mit der ein großer Verstellhub des Schiebers trotz geringer Baugröße erreicht wird. Bei einer praktischen Ausführung hat der Gewindegang eine Steigung von 10 mm, womit sich bei einer noch annehmbaren Drehzahl der Gewindespindel ein Hub von 70 mm und mehr erzielen läßt.

Schließlich wird noch darauf hingewiesen, daß natürlich die Antriebswelle 16 und die darin gelagerte Welle 50 gemeinsam über entsprechende Getriebemittel von einem einzigen Motor angetrieben werden, wobei die Getriebemittel je nach Bedarf so ausgelegt werden, daß während einer Pendelbewegung des Führungsgehäuses die Hülse gegebenenfalls mehrfach ein- und ausgefahren wird. Selbstverständlich könnte man für die Welle 50 aber auch einen getrennten Antriebsmotor vorsehen, wodurch jedoch der Aufwand wesentlich vergrößert würde.

S W F   A u t o - E l e c t r i c   G m b H

7120 Bietigheim-Bissingen

0219020

PAL/A 12 898
Kübler/Tü
8.10.1985

Scheibenwischeranlage, insbesondere für Kraftfahrzeuge

Patentansprüche:

1. Scheibenwischeranlage, insbesondere für Kraftfahrzeuge, mit einem von einem Antriebsmotor um eine Drehachse pendelnd angetriebenen Führungsgehäuse für einen radial verstellbaren Schieber, an dem ein Wischhebel befestigbar ist, sowie mit Mitteln zum radialen Hin- und Herverschieben dieses Schiebers und damit des Wischhebels während der Pendelbewegung des Führungsgehäuses, dadurch gekennzeichnet, daß die Mittel zum radialen Verschieben des Schiebers (40) ein Schraubengetriebe (5) beinhalten.

2. Scheibenwischeranlage nach Anspruch 1, dadurch gekennzeichnet, daß das Schraubengetriebe (5) ein Wälzschraubengetriebe ist.

3. Scheibenwischeranlage nach Anspruch 1 oder 2, dadurch gekennzeichnet, daß in dem Führungsgehäuse (10) drehbar eine Gewindespindel (30) gelagert ist und daß der Schieber als drehfest in dem Führungsgehäuse (10) geführte Gewindehülse (40) ausgebildet ist.

4.Scheibenwischeranlage nach Anspruch 3, dadurch gekennzeichnet, daß in die äußere Mantelfläche der Gewindehülse (40) und in die benachbarte Gehäusewand des Führungsgehäuses (10) wenigstens je eine Längsnut (45,46) eingearbeitet sind und als Verdrehsicherung für die Gewindehülse (40) Wälzkörper, vorzugsweise Kugeln (47) dienen, die in beide Längsnuten (45,46) eingreifen.

5.Scheibenwischeranlage nach Anspruch 4. dadurch gekennzeichnet, daß mehrere gleichmäßig über den Umfang verteilte Längsnuten (45,46) in der Gewindehülse (40) und der benachbarten Gehäusewand des Führungsgehäuses (10) angeordnet sind.

6.Scheibenwischeranlage nach Anspruch 5, dadurch gekennzeichnet, daß das Gehäuse ein Basisteil (11) mit einem Stutzen (12) und ein in dem Stutzen festgelegtes Rohr (14) aus einem Material großer Härte aufweist und daß in dieses Rohr (14) die Längsnuten (46) eingearbeitet sind.

7.Scheibenwischeranlage nach wenigstens einem der vohergehenden Ansprüche, dadurch gekennzeichnet, daß die Gewindespindel (30) einseitig in einem Kugellager (21) geführt ist, das in dem Basisteil (11) fixiert ist.

8.Scheibenwischeranlage nach Anspruch 7, dadurch gekennzeichnet, daß das Kugellager (21) in Achsrichtung der Gewindespindel (30) durch einen Sprengring (20) im Basisteil (11) und auf der gegenüberliegenden Seite durch das in den Stutzen (12) eingepreßte Rohr (14) fixiert ist.

9.Scheibenwischeranlage nach wenigstens einem der vorhergehenden Ansprüche, dadurch gekennzeichnet, daß die Gewindehülse (40) eine durchgehende Bohrung (41) aufweist, die auf der Seite des Wischhebels durch ein Verschlußstück abgeschlossen ist.

10.Scheibenwischeranlage nach wenigstens einem der vorhergehenden Ansprüche, dadurch gekennzeichnet, daß das Gewinde (32) in der Gewindespindel (30) in der vorderen Stirnfläche (31) endet und an dieser Stirnfläche eine Abdeckscheibe (61) fixiert ist.

A 12 898                         - 3 -                    0219020

11.Scheibenwischeranlage nach wenigstens einem der vorhergehenden
Ansprüche, dadurch gekennzeichnet, daß das Führungsgehäuse (10) drehfest mit
einer als Hohlwelle ausgebildeten Antriebswelle (16) verbunden ist und daß
in der Hohlwelle (16) eine Welle (50) drehbar gelagert ist, die über ein
Kegelradgetriebe (51,33) mit der Gewindespindel (30) wirkverbunden ist.

Fig.1

Fig.3

Fig.2

0219020